# EUROPÄISCHE PATENTSCHRIFT

(11) **EP 3 090 246 B1**
(45) Veröffentlichungstag und Bekanntmachung des Hinweises auf die Patenterteilung: **18.10.2017**
(21) Anmeldenummer: 14808536.8
(22) Anmeldetag: 24.11.2014
(51) Int. Cl.: G01N 9/26

(54) **DICHTEWÄCHTER MIT GETRENNTEN GEHÄUSETEILEN UND MONTAGEVERFAHREN**
DENSITY MONITOR COMPRISING SEPARATE HOUSING PARTS, AND ASSEMBLY METHOD
DISPOSITIF DE SURVEILLANCE DE DENSITÉ À PARTIES DE BOÎTIER SÉPARÉES ET PROCÉDÉ DE MONTAGE

(30) Priorität: 31.12.2013 DE 102013115009
(43) Veröffentlichungstag der Anmeldung: 09.11.2016
(73) Patentinhaber: Trafag AG, 8706 Bubikon (CH)
(72) Erfinder: HALBHEER, Remo, CH-8340 Hinwill (CH)
(74) Vertreter: Kastel, Stefan
(86) Internationale Anmeldenummer: PCT/EP2014/075361
(87) Internationale Veröffentlichungsnummer: WO 2015/101441

(56) Entgegenhaltungen:
- EP-A1- 0 545 508
- DE-A1- 3 324 011

## Beschreibung

Die Erfindung betrifft einen Dichtewächter zur Überwachung einer Gasdichte mit einem Gehäuse und einem Kabelanschluss. Ein solcher Dichtewächter ist aus der DE 10 2010 055 249 A1 bekannt. Weiter betrifft die Erfindung ein Verfahren zur Montage eines solchen Dichtewächters.

Zum technologischen Hintergrund zu Dichtewächtern wird insbesondere auf die JPS5578231A, die US 1527597 A, die US 3431785 A, die US 6125692 A, die US 2662394 A, die US 5421190 A und die DE 10232823 A verwiesen.

Dichtewächter sind Messgeräte zur Überwachung der Gasdichte eines zu überwachenden Gases. Wie aus der DE 10 2010 055 249 A1 bekannt, dienen Dichtewächter insbesondere zur Überwachung der Dichte in gasisolierten Hoch- und Mittelspannungsanlagen oder -geräten, wie zum Beispiel Hochspannungsschaltanlagen, -wandlern, -rohrleitungen, Schaltgeräten und Transformatoren, als Isolator befindlichen Gases, zum Beispiel SF6.

Es sind hierzu z.B. aus der DE 10232823 A1 auf elektronischen Messprinzipien basierende Dichtewächter bekannt, die mit einem elektronischen Dichtesensor als Messwertgeber versehen sind, der einen im Gas angeordneten Schwingquarz aufweist und als Messwert ein zur Dichte des Gases proportionales Frequenzsignal liefert, wobei das Frequenzsignal einer elektronischen Auswerteeinheit zugeführt wird.

Auf dem Markt haben sich dagegen auf mechanischen Messprinzipien beruhende Dichtewächter durchgesetzt, die aufgrund ihres mechanischen Messprinzips sehr zuverlässig und wartungsarm auch über sehr lange Zeiträume hinweg arbeiten. Im einfachsten und am häufigsten vorzutreffenden Fall steht hierbei eine über ein Referenzvolumen arbeitende Membran mit dem Messvolumen in Verbindung, wobei eine durch eine Änderung der Gasdichte verursachte Membranbewegung einen Schalter betätigt. Hierzu ist beispielsweise bei dem aus der DE 10 2010 055 249 A1 bekannten Dichtewächter eine Membran eines Metallbalgs an einen Schalter angeschlossen, so dass eine Membranbewegung über einen Mindestweg hinaus einen Schaltvorgang auslöst.

Aus der DE 33 24 011 A1 ist ein Dichtewächter mit einem Gehäuse bekannt, in dem eine Messmechanik und elektrische Bauteile untergebracht sind, und an das ein Kabel angeschlossen ist, wobei der Dichtewächter durch eine Abdeckhaube gegen direkte Sonneneinstrahlung von oben sowie gegen unbeabsichtigte Verdrehung einer Einstellschraube geschützt ist. Das Kabel ist durch eine Durchgangsöffnung in der Abdeckhaube geführt.

Aus der EP 0 545 508 A1 ist eine metallgekapselte gasisolierte Schaltanlage mit einem Schaltkammergehäuse, in der eine Schaltvorrichtung zum Schalten von Starkströmen mit Spannungen im Bereich von 36kV untergebracht ist, und einem Kabelanschlussgehäuse mit einem Anschluss für das Starkstromkabel, auf welches der Starkstrom aufgeschaltet wird, bekannt.

Dichtewächter werden oft unter rauen Betriebsbedingungen in Schaltanlagen eingesetzt, wo große Feldspannungen und auch Feldspannungsänderungen auftreten. Ihre Funktion ist oft sicherheitsrelevant. Daher sind Anschlusskabel zum Anschließen von Dichtewächtern meist mit sehr starken Abschirmungen versehen und sind entsprechend steif und unhandlich.

Aufgabe der Erfindung ist es, einen Dichtewächter montagefreundlicher und/oder wartungsfreundlicher zu gestalten.

Diese Aufgabe wird mit einem Dichtwächter gemäß Anspruch 1 gelöst.

Vorteilhafte Ausgestaltungen der Erfindung sind Gegenstand der Unteransprüche.

Ein Hauptaspekt der hier dargestellten Erfindung betrifft eine einfache Handhabung und Montage des Dichtewächters.

Hierzu schafft die Erfindung gemäß einem Aspekt einen Dichtewächter mit einem Gesamtgehäuse, das in einen Messbereichsgehäuseteil und in einen Kabelanschlussgehäuseteil aufgeteilt ist.

Es ist vorgesehen, dass der Messbereichsgehäuseteil eine Messmechanik mit einer Erfassungseinrichtung zum Umwandeln einer mit der Gasdichte sich ändernden Größe in ein elektrisches Signal und ein erstes Verbindungselement einer Kontaktverbindung enthält und dass der Kabelanschlussgehäuseteil einem Kabelanschlussbereich und ein zweites Verbindungselement der Kontaktverbindung aufweist.

Es ist bevorzugt, dass das die Kontaktverbindung eine Steckverbindung ist und dass das eine der Steckverbindungselemente mehrere Stifte und das andere der Steckverbindungselemente mehrere Buchsen zur kontaktierenden Aufnahme der Stifte aufweist.

Es ist vorgesehen, dass das zweite Steckverbindungselement mehrere Kabelklemmen zum Anschließen von Litzen eines Anschlusskabels aufweist, die über die Stifte und Buchsen mit unterschiedlichen Ausgängen der Erfassungseinrichtung in Kontakt bringbar sind.

Es ist vorgesehen, dass das Kabelanschlussgehäuseteil an dem Messbereichsgehäuseteil lösbar befestigt ist.

Es ist weiter vorgesehen, dass das Kabelanschlussgehäuseteil eine Kabelanschlussöffnung zum Durchführen von Litzen eines Anschlusskabels aufweist, wobei die Kabelanschlussöffnung mit einer Kabelumhüllungsbefestigung zum Befestigen einer Kabelumhüllung versehen ist.

Es ist bevorzugt, dass das Kabelanschlussgehäuseteil eine Steckverbindungsbefestigung oder Steckverbindungsaufnahme zum Befestigen eines Steckverbinderelements aufweist.

Es ist bevorzugt, dass das Kabelanschlussgehäuseteil ein Steckverbindungselement enthält, das Befestigungsklemmen zum Anklemmen von Litzen eines Anschlusskabels und einen Steckverbindungsbereich zur Steckverbindung mit einem korrespondierenden Steckverbindungselement an dem Messbereichsgehäuseteil aufweist.

Es ist bevorzugt, dass das Messbereichsgehäuseteil eine Leiterplatte zur Verarbeitung und Weiterleitung von bei der Erfassung der Dichte erzeugten elektrischen Signalen und einen Leiterplattensteckverbinder zur Steckverbindung mit einem korrespondierenden Steckverbindungselement an dem Kabelanschlussgehäuseteil enthält.

Es ist bevorzugt, dass der Dichtewächter zur Überwachung einer Gasdichte in einem Messvolumen mit einer Membran ausgerüstet ist, die mit dem Messvolumen derart in Verbindung steht, dass sie sich bei Änderung einer Gasdichte in dem Messvolumen bewegt, und eine mit der Membran verbundene Membranbewegungserfassungseinrichtung zum Umwandeln einer Membranbewegung in ein elektrisches Signal aufweist, wobei das elektrische Signal über eine lösbare Kontaktverbindung, insbesondere Steckverbindung von dem Messbereichsgehäuseteil zu dem Kabelanschlussgehäuseteil und dort zu einem Kabel überführbar ist.

Auch kann vorgesehen sein, dass der Messbereichsgehäuseteil eine Gehäusetrennwand zum Trennen des Messbereichs von einem Kabelanschlussbereich aufweist.

Es ist bevorzugt, dass das Kabelanschlussgehäuseteil an dem Messbereichsgehäuseteil lösbar befestigt ist.

Es ist bevorzugt, dass das Kabelanschlussgehäuseteil eine Kabelanschlussöffnung zum Durchführen von Litzen eines Anschlusskabels aufweist, wobei die Kabelanschlussöffnung mit einer Kabelumhüllungsbefestigung zum Befestigen einer Kabelumhüllung versehen ist.

Auch kann vorgesehen sein, dass das Kabelanschlussgehäuseteil eine Steckerbefestigung zum Befestigen eines Steckverbinders aufweist.

Steckverbindungselemente einer Steckverbindung zwischen den Gehäuseteilen können lösbar aneinander befestigt sein, z.B. mittels einer Rastverbindung.

Auch kann vorgesehen sein, dass die Verbindungselemente an ihren jeweiligen Gehäuseteilen derart aneinander befestigt sind, dass bei passender Montage der Gehäuseteile zueinander gleichzeitig eine elektrische Verbindung zur Weiterleitung elektrischer Signale durch ein Kabel hergestellt wird. Die elektrische Verbindung ist bevorzugt eine Steckverbindung.

Anstelle von Steckverbindungen können aber auch andere elektrische Verbindungen vorgesehen sein, z.B. Kontaktzungen, Kontaktpads oder dergleichen.

Bevorzugt ist ein Steckverbinder vorgesehen, der Befestigungsklemmen zum Anklemmen von Litzen eines Anschlusskabels und einen Steckverbindungsbereich zur Steckverbindung mit einem korrespondierenden Steckverbindungselement an dem Messbereichsgehäuseteil aufweist.

Eine bevorzugte Ausgestaltung des Dichtewächters ist zur Überwachung einer Gasdichte in einem Messvolumen ausgebildet und weist eine Membran oder eine Trennwand auf, die eine in einem Dichtewächtergehäuse ausgebildete Referenzkammer von dem Messvolumen trennt.

Das Messbereichsgehäuseteil ist vorzugsweise durch ein Dichtewächtergehäuse gebildet und das Kabelanschlussgehäuseteil ist vorzugsweise durch ein Stecker-Gehäuse gebildet.

Das Messbereichsgehäuseteil weist vorzugsweise eine Anzeige zur Anzeige eines erfassten Dichtewerts auf.

Durch das Trennen eines Gesamtgehäuses in einen Messbereichsgehäuseteil, der die Messmechanik und die damit verbundenen Elemente, wie z.B. Anzeigen oder Erfassungseinrichtungen zur Generierung von elektrischen Signalen oder auch Aufbereitungselektronik enthält, und einen Kabelanschlussgehäuseteil, der eine Kabelbefestigung und Kontaktelemente zur Verbindung mit Litzen des Kabels enthält, lässt sich auch ein sehr dickes und unhandliches Kabel zunächst bequem an das noch lose und sehr gut zugängliche Kabelanschlussgehäuseteil anschließen. Das Messbereichsgehäuseteil lässt sich bequem ohne Behinderung durch ein angeschlossenes Kabel auch an schwerer zugänglichen Messstellen zur Verbindung mit einem Messvolumen montieren. Anschließend können die Gehäuseteile miteinander verbunden werden. Vorzugsweise sind Positionierhilfen vorgesehen und besonders bevorzugt wird gleichzeitig mit der Montage der Gehäuseteile eine elektrische Verbindung, insbesondere eine Steckverbindung hergestellt.

Insgesamt lässt sich somit die Montage eines Dichtewächters gegenüber bisher in der Praxis weit verbreitet eingesetzten Dichtewächtern wesentlich vereinfachen und bequemer gestalten.

Gemäß einem weiteren Aspekt schafft die Erfindung demnach auch ein Montageverfahren zum Montieren eines Dichtewächters mit getrennten Gehäuseteilen, mit den Schritten:
- Anschließen eines Messbereichsgehäuseteils, das mit einer Messmechanik und einer Erfassungseinrichtung zur Umwandeln einer mit der zu überwachende Gasdichte korrelierenden Messgröße in ein elektrisches Signal und einem mit der Erfassungseinrichtung elektrisch verbundenen ersten elektrischen Verbindungselement zum Herstellen einer elektrischen Verbindung versehen ist, an ein zu überwachendes Messvolumen, wobei der Messbereichsgehäuseteil von einem Kabelanschlussgehäuseteil getrennt ist und ohne das Kabelanschlussgehäuseteil montiert wird,
- Anschließen eines Kabels an das von dem Messbereichsgehäuseteil getrennte Kabelanschlussgehäuseteil und Verbinden von Litzen des Kabels mit Kontaktanschlüssen eines an dem Kabelanschlussgehäuseteil vorgesehenen zweiten Verbindungselement zum Herstellen der elektrischen Verbindung,
- Positionieren und Befestigen des an das Kabel angeschlossenen Kabelanschlussgehäuseteils an das an das Messvolumen angeschlossene Messbereichsgehäuseteil unter Verbindung des ersten Verbindungselements mit dem zweiten Verbindungselement, um so die elektrische Verbindung durch die Montage der Gehäuseteile aneinander herzustellen.

In einer bevorzugten Ausgestaltung lässt sich ein Weg einer Bewegung einer sich bei Dichteänderung bewegenden Trennwand über ein Getriebeelement vergrößern und kann in vergrößertem Maßstab durch eine Bewegungserfassungseinrichtung zum Umwandeln in ein elektrisches Signal abgegriffen werden.

Das Getriebeelement kann jegliches Getriebeelement zur Wegvergrößerung sein, auch Radgetriebe oder Zahnradgetriebe oder dergleichen sind denkbar. Ein Hebelement und insbesondere ein einarmiger Hebel ist bevorzugt, da dieser einfach, kostengünstig, wartungsfrei und zuverlässig und zudem platzsparend ausgebildet sein kann.

Gemäß einem weiteren Aspekt schafft die Erfindung demnach einen Dichtewächter, vorzugsweise mit getrennten Gehäuseteilen, zur Überwachung einer Gasdichte in einem Messvolumen mit einer Membran, die mit dem Messvolumen derart in Verbindung steht, dass sie sich bei Änderung einer Gasdichte in dem Messvolumen bewegt, und einer mit der Membran verbundenen Membranbewegungserfassungseinrichtung zum Umwandeln der Membranbewegung in ein elektrisches Signal, wobei die Membranbewegungserfassungseinrichtung mittels eines Getriebeelements zum mechanischen Vergrößern des Membranbewegungsweges mit der Membran gekoppelt ist.

Es ist bevorzugt, dass die Membranbewegungserfassungseinrichtung eine Schalteinrichtung zum Auslösen eines Schaltvorganges bei Bewegung der Membran aufweist.

Es ist bevorzugt, dass das Getriebeelement zum Umsetzen der Membranbewegung in einen größeren Schaltweg ausgebildet ist.

Es ist bevorzugt, dass das Getriebeelement ein Hebel ist.

Es ist bevorzugt, dass der Hebel als einarmiger Hebel ausgebildet ist.

Es ist bevorzugt, dass der Hebel an einem ersten Ende an einem Fixpunkt in einem Gehäuse des Dichtewächters schwenkbar gelagert ist, in einem mittleren Bereich an der Membran angekoppelt ist und an dem zweiten Ende mit der Membranbewegungserfassungseinrichtung gekoppelt ist.

Es ist bevorzugt, dass das zweite Ende mit der Schalteinrichtung zum Durchführen eines Schaltvorganges bei Überschreiten eines vorbestimmten Schaltweges gekoppelt ist.

Es ist bevorzugt, dass die Membran als Teil eines Balgs, insbesondere eines Metallbalgs ausgebildet ist, wobei der Balg zur Vergrößerung einer Balgbewegung in eine größere zu erfassende Bewegung mittels des Getriebeelements an die Membranbewegungserfassungseinrichtung gekoppelt ist.

Gemäß einem weiteren Aspekt schafft die Erfindung einen Dichtewächter mit Hebelgetriebe.

Es ist bevorzugt, dass das Hebelgetriebe zur Umsetzung einer kleineren Balgbewegung eines eine Membran aufweisenden Balgs in eine größere Schaltbewegung zum Durchführen eines Schaltvorganges bei Veränderung der Gasdichte über einen bestimmten Wert hinaus ausgebildet ist.

Durch die Vergrößerung des Membranbewegungsweges steht ein größerer Stellweg zum Erfassen der Membranbewegung zur Verfügung. Insbesondere kann aus einer kleineren Membranbewegung ein größerer Schaltweg geschaffen werden. Damit können auch kleinere Änderungen in der Gasdichte als bisher zum Auslösen eines Schaltvorganges verwendet werden. Auch sind größere Freiheiten im Design gegeben, da die Membran nicht auf maximalen Bewegungsweg ausgelegt werden muss.

Insbesondere ist als Getriebeelement ein Hebel und mehr insbesondere ein einarmiger Hebel bevorzugt. Wenn ein solcher Hebel an einem Ende ortsfest gelagert wird, in einem mittleren Bereich an der Membran gekoppelt ist und am anderen Ende ein Abgriff der Membranbewegungserfassung erfolgt, insbesondere ein Schalter betätigt wird, dann lässt sich mit einem äußerst kompakten Design ein großer Schaltweg erzielen. Insbesondere kann ein Metallbalg wie z. B. ein Edelstahlbalg zum Bilden der Membran vorgesehen werden. Damit kann ein sehr zuverlässiger und medienkompatibler, wartungsarmer und dennoch höchst kompakter und dennoch genauer Dichtewächter geschaffen werden.

Durch eine mechanische Vergrößerung der Membranbewegung ist eine größere Vielfalt von Schaltern einsetzbar. Es kann auch auf einfachere und kostengünstigere Schalter zurückgegriffen werden, die einen größeren Schaltweg zur sicheren Auslösung benötigen.

Die Bewegungserfassungseinrichtung kann jegliche Einrichtung zum Umwandeln einer Bewegung in ein elektrisches Signal sein. Zeiger oder dergleichen bloße Anzeigen sind von diesem Begriff nicht umfasst. Vorzugsweise ist als Bewegungserfassungseinrichtung eine Schalteinrichtung wie insbesondere ein Mikroschalter vorgesehen.

Vorzugsweise weist der Dichtewächter zusätzlich zu der Bewegungserfassungseinrichtung, mit der eine durch ein Getriebeelement vergrößerte Bewegung der Membran in ein elektrisches Signal umgewandelt wird, noch eine Anzeige auf, die ebenfalls durch eine Bewegung der Membran angesteuert wird und durch die die erfasste Gasdichte anzeigbar ist.

Ein Ausführungsbeispiel der Erfindung wird nachfolgend anhand der beigefügten Zeichnung näher erläutert. Darin zeigt:
- Fig. 1: eine schematische aufgeschnittene Darstellung einer Ausführungsform eines Dichtewächters im auseinandergebauten Zustand vor einer Montage,

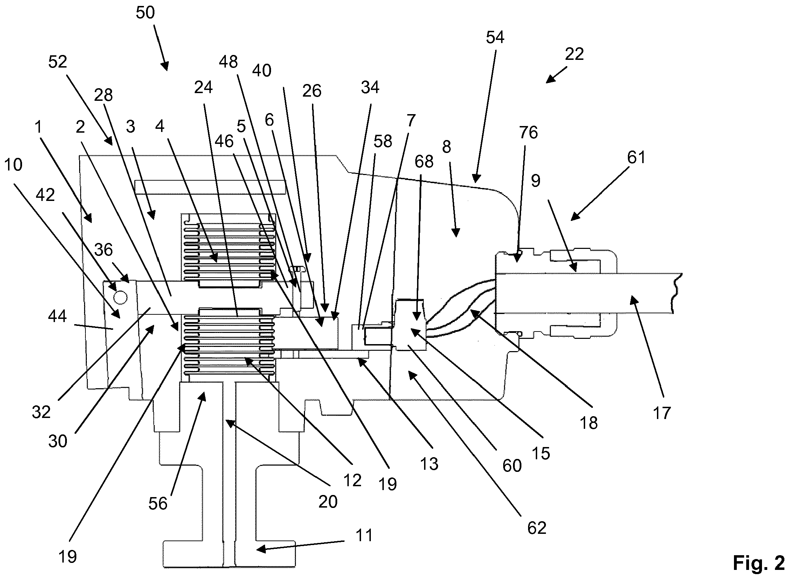

- Fig. 2: eine Darstellung wie in Fig. 1 im zusammengebauten, am Einsatzort montierten Zustand; und

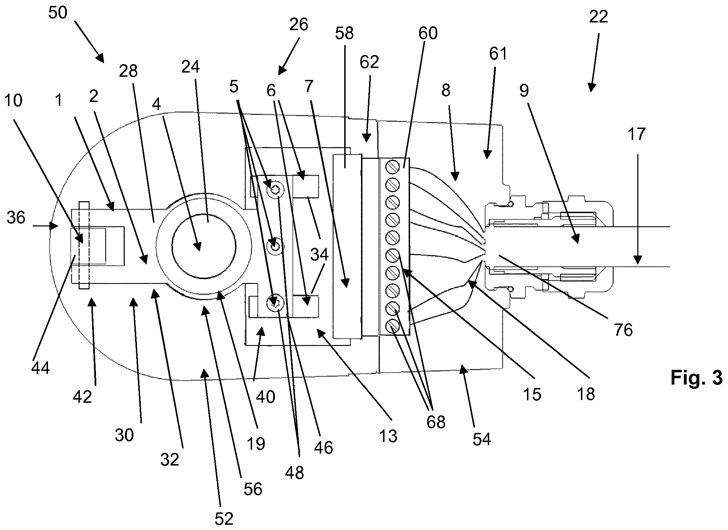

- Fig. 3: eine schematische aufgeschnittene Draufsicht auf den Dichtewächter von Fig. 2.

In den Figuren ist ein Ausführungsbeispiel eines Dichtewächters 22 dargestellt. Der Dichtewächter 22 ist zur Überwachung einer Gasdichte in einem Messvolumen ausgebildet. Der Dichtewächter 22 ist mit einem Gesamtgehäuse 50 versehen, das in einen Messbereichsgehäuseteil 52 und in einen Kabelanschlussgehäuseteil 54 aufgeteilt ist.

Der Messbereichsgehäuseteil 52 enthält eine Messmechanik 56 mit einer Erfassungseinrichtung 26 zum Umwandeln einer mit der Gasdichte sich ändernden Größe in ein elektrisches Signal und ein erstes Steckverbindungselement 58 einer Steckverbindung 62.

Der Kabelanschlussgehäuseteil 54 enthält einen Kabelanschlussbereich 61 und ein zweites Steckverbindungselement 60 der Steckverbindung 62.

Das eine der Steckverbindungselemente 58, 60 hat mehrere Stifte 64 und das andere der Steckverbindungselemente 58, 60 hat mehrere Buchsen 66 zur kontaktierenden Aufnahme der Stifte 64. Die Stifte 64 und Buchsen 66 sind Beispiele für Kontaktanschlüsse zum Schaffen elektrischer Verbindungen für mehrere unterschiedliche Leitungen zum Leiten elektrischer Signale.

Das zweite Steckverbindungselement 60 weist mehrere Kabelklemmaufnahmen 68 zum klemmenden Anschließen von Litzen 18 eines Anschlusskabels - Kabel 17 - auf, die über die Stifte 64 und Buchsen 66 mit unterschiedlichen Ausgängen der Erfassungseinrichtung 26 in Kontakt bringbar sind.

Das Kabelanschlussgehäuseteil 54 ist über Schraubverbindungen 70 mit Positionierhilfen 72 in zueinander definierter Position an dem Messbereichsgehäuseteil 52 lösbar befestigt.

Das Kabelanschlussgehäuseteil 54 weist eine Durchgangsöffnung 76 zum Durchführen von Litzen 18 des Kabels 17 auf, wobei die Durchgangsöffnung 76 mit einer Kabelumhüllungsbefestigung - insbesondere Kabelverschraubung 9 - zum Befestigen einer Kabelumhüllung versehen ist.

Das Kabelanschlussgehäuseteil 54 weist eine Steckverbindungsbefestigung 74 - insbesondere mit wenigstens einer Befestigungsschraube 14 - zum Befestigen des zweiten Steckverbindungselements 60 auf.

Das Kabelanschlussgehäuseteil 54 enthält das zweite Steckverbindungselement 60, das Befestigungsklemmen zum Anklemmen der Litzen 18 des Kabels 17 und einen Steckverbindungsbereich zur Steckverbindung mit dem korrespondierenden ersten Steckverbindungselement 58 an dem Messbereichsgehäuseteil 52 aufweist.

Das Messbereichsgehäuseteil 52 enthält eine Leiterplatte 13 mit Bauelementen zur Erzeugung, Verarbeitung und/oder Weiterleitung von bei der Erfassung der Dichte erzeugten elektrischen Signalen und einen Leiterplattensteckverbinder 7 als erstes Steckverbindungselement 58 zur Steckverbindung mit dem korrespondierenden zweiten Steckverbindungselement 60 an dem Kabelanschlussgehäuseteil 54.

Das Gesamtgehäuse 50 des Dichtewächters 22 ist bei der gezeigten Ausgestaltung in den Messbereichsgehäuseteil 52 in Form eines Dichtewächtergehäuse 1 und den Kabelanschlussgehäuseteil 54 in Form eines Stecker-Gehäuses 8 aufgeteilt.

Der Dichtewächter 22 ist zur Überwachung einer Gasdichte in einem Messvolumen mit einer Membran 24 ausgerüstet, die mit dem Messvolumen derart in Verbindung steht, dass sie sich bei Änderung einer Gasdichte in dem Messvolumen bewegt, und mit der Erfassungseinrichtung in Form einer mit der Membran 24 verbundenen Membranbewegungserfassungseinrichtung 26 zum Umwandeln einer Membranbewegung in ein elektrisches Signal versehen, wobei das elektrische Signal über eine lösbare elektrische Verbindung, insbesondere Steckverbindung 62, von dem Messbereichsgehäuseteil 52 zu dem Kabelanschlussgehäuseteil 54 und dort zu dem Kabel 17 überführbar ist.

Der Dichtewächter 22 weist demnach eine Trennwand oder Membran 24 auf, die mit dem Messvolumen derart in Verbindung steht, dass sie sich bei Änderung einer Gasdichte in dem Messvolumen bewegt. Weiter ist die mit der Membran 24 verbundene Membranbewegungserfassungseinrichtung 26 zum Umwandeln einer Membranbewegung in ein elektrisches Signal vorgesehen. Die Membranbewegungserfassungseinrichtung 26 ist mittels eines Getriebeelements 28 mit der Membran 24 gekoppelt. Das Getriebeelement 28 ist derart ausgebildet, dass es den Membranbewegungsweg vergrößert. Die Membranbewegungserfassungseinrichtung 26 greift den durch das Getriebeelement 28 vergrößerten Weg ab und nutzt diesen zur Erzeugung eines elektrischen Signals.

In der gezeigten bevorzugten Ausgestaltung ist zum Schaffen des Getriebeelements 28 ein Hebelgetriebe 30 mit einem Hebel 32 als Getriebeelement 28 vorgesehen.

Der Hebel ist als einarmiger Hebel 32 ausgebildet. Hierzu ist der Hebel 32 an einem ersten Ende 36 in einem Hebellager 38 an einem Fixpunkt relativ zu dem Dichtewächtergehäuse 1 gelagert. Mit einem mittleren Bereich ist der Hebel 32 an die Membran 24 angelenkt. An dem freien zweiten Ende 40 greift der Hebel 32 an der Membranbewegungserfassungseinrichtung 26 an.

Die Membranbewegungserfassungseinrichtung 26 ist bevorzugt eine Schalteinrichtung 34 zum Durchführen eines Schaltvorgangs, falls sich die Gasdichte um einen vorbestimmten Wert ändert. Insbesondere wird mit der Schalteinrichtung 34 ein Warnsignal erzeugt, falls sich die Gasdichte um mehr als einen Toleranzwert ändert.

Bei dieser Ausgestaltung ist der Hebel 32 ausschließlich oder im Wesentlichen zum Durchführen eines Schaltvorganges vorgesehen und kann daher als Schalthebel 2 bezeichnet werden.

Zusätzlich ist noch eine Anzeige 3 vorgesehen, auf der der erfasste Gasdichtewert anzeigbar ist. Diese Anzeige ist an dem Messbereichsgehäusteil 52 vorgesehen und mit der Messmechanik 56, insbesondere wenigstens einem Balg 12, 19 verbunden.

Diese sich in dem Dichtewächtergehäuse 1 befindende Messmechanik 56 wird im Folgenden näher erläutert. Die Membran 24 ist als Trennwand in oder an wenigstens einem Balg 12 in Form wenigstens eines Metallbalgs 19 ausgebildet. Der Metallbalg 19 enthält eine Referenzkammer 4, die ein Referenzgasvolumen bildet. Die Membran 24 trennt die Referenzkammer 4 von einem Messvolumen. Hierzu ist ein Druckanschluss 11 vorgesehen, mit dem der Dichtewächter 22 an eine Schaltanlage (nicht dargestellt) oder dergleichen zu überwachende Einrichtung angeschlossen ist und der einen Kanal für das zu überwachende Gas aufweist. In dem dargestellten Beispiel wird Schaltanlagegas 20 durch den Druckanschluss 11 zu einer weiteren Kammer 21 in dem Balg 12, 19 geleitet. Diese weitere Kammer 21 ist durch die Membran 24 von der Referenzkammer 4 getrennt. Es ist auch eine Ausgestaltung mit zwei Balgen 12, 19, von denen einer 19 die Referenzkammer 4 und der andere Balg 12 das Schaltanlagengas 20 enthält möglich. Der Hebel 32 kann dann zwischen den beiden gegeneinander vorgespannten und gegeneinander arbeitenden Balgen 12, 19 vorgesehen sein.

Bei einer Ausführung mit einem durch die Trennwand oder Membran in zwei Kammern 4, 21 aufgeteilten Doppelbalg 12, 19 greift der Hebel 32 um den mit der Membran 24 als Trennwand versehenen mittleren Bereich des Metallbalgs 19 herum und ist daran angeschlossen, so dass er durch eine Bewegung des mittleren Bereichs des Balgs 12, 19 mitgenommen wird.

Bei der dargestellten Ausführungsform ist der Hebel 32 als Schalthebel 2 ausgebildet. An dem Dichtewächtergehäuse 1 ist ortsfest hierzu eine Lagerung 42 für das erste Ende 36 des Schalthebels 2 ausgebildet, so dass ein Schalthebelgelenk 10 gebildet ist.

In der konkreten Ausführungsform weist die Lagerung 42 einen mittleren vorstehenden Flansch 44 mit Durchgangsöffnung für einen Lagerstift auf. Das erste Ende 36 ist gegabelt und greift um den Flansch 44 herum und ist ebenfalls mit einer entsprechenden Durchgangsöffnung für den Lagerstift versehen.

Der mittlere Bereich des Schalthebels 2 weist einen Ringbereich zum Umgreifen des Metallbalges 19 auf.

Das zweite Ende 40 weist einen Querbalken 46 auf, in dem mehrere Öffnungen 48 vorgesehen sind, welche durch Einstellschrauben 5 durchgriffen werden. Die Öffnungen 48 weisen einen größeren Durchmesser als der Schaftbereich der Einstellschrauben 5 auf.

Die Einstellschrauben 5 wirken als Stößel zum Betätigen der Schalteinrichtung 34 und können eingedreht oder herausgedreht werden, um den Schaltweg einzustellen.

Wie dargestellt, können durch das zweite Ende 40 mehrere Schalteinrichtungen 34 betätigt werden. In dem dargestellten Ausführungsbeispiel sind wengistens zwei Mikroschalter 6 vorgesehen, die durch den Schalthebel 2 betätigt werden können. Hier können durch die Einstellschrauben 5 unterschiedliche Schaltwege eingestellt werden, so dass die Mikroschalter 6 jeweils Schaltvorgänge bei unterschiedlichen Gasdichtewerten durchführen. Es kann auch noch ein dritter Mikroschalter (nicht dargestellt) durch die mittlere Einstellschraube 5 betätigt werden.

Die durch die mehreren Mikroschalter 6 gebildete Schalteinrichtung 34 ist auf der Leiterplatte 13 befestigt, die die Schaltvorgänge der Mikroschalter 6 erfasst und die entsprechenden elektrischen Signale der Schaltvorgänge an Kontaktanschlüsse wie z.B. die Stifte 64 in dem Leiterplattensteckverbinder 7 weiterleitet, der das erste Steckverbindungselement 58 bildet.

Anstelle des dritten Mikroschalters kann auf der Leiterplatte noch ein Sensor (nicht dargestellt) vorgesehen sein, der ein Signal erzeugt, das ein Maß für die Stellung des Hebels 32 abbildet und sich mit der Stellung des Hebels 32 ändert. Dieses Stellungssignal kann z.B. zur Fernanzeige des aktuellen Dichtewertes herangezogen werden. Auch dieses den aktuellen Dichtewert angebende Signal wird an einen der Kontaktanschlüsse - einen der Stifte 64 - des ersten Steckverbindungselements 58 geleitet.

Der Leiterplattensteckverbinder 7 ist ein Beispiel für das erste Steckverbindungselement 58 an dem Messbereichsgehäuseteil 52. An dem durch das Steckergehäuse 8 gebildeten Kabelanschlussgehäuseteil 54 ist das zweite Steckverbindungselement 60 mit Befestigungsklemmen zum Einklemmen von Litzen 18 des Kabel 17 und mit einem Steckverbindungsbereich zur Steckverbindung mit dem korrespondierenden ersten Steckverbindungselement 58 des Messbereichsgehäuseteils 52 vorgesehen.

Das Steckverbindungselement 60 an dem Stecker-Gehäuse 8 weist z.B. eine Kabelklemme 15 mit kleinen Klemmschrauben auf, so dass die einzelnen Litzen 18 des Kabels 17 in der Kabelklemme 15 befestigt werden können. Weiter ist der Steckverbindungsbereich vorgesehen, der in dem Steckverbindungsbereich des Leiterplattensteckverbinders 7 ansteckbar ist und eventuell auch mittels einer Verrastung oder dergleichen befestigbar ausgebildet sein kann.

In dem dargestellten Ausführungsbeispiel weist der durch das Stecker-Gehäuse 8 gebildete Kabelanschlussgehäuseteil 54 weiter eine durch Befestigungsschrauben 14 realisierte Steckverbindungsbefestigung 74 zum Befestigen der Kabelklemme 15 auf. Bei dieser Ausgestaltung ist vorzugsweise keine Verrastung vorgesehen.

Das Stecker-Gehäuse 8 ist mittels eines Gewindedom 16, der an dem Dichtewächtergehäuse 1 vorstehend ausgebildet ist, an das Dichtewächtergehäuse 1 befestigbar. Der Gewindedom 16 ist Teil der Schraubverbindung 70 und bildet außerdem eine der Positionierhilfen 72.

Der durch das Stecker-Gehäuse 8 gebildete Kabelanschlussgehäuseteil 52 weist weiter eine Durchgangsöffnung 76 für die Litzen 18 auf. An der Durchgangsöffnung 76 ist eine Kabelverschraubung 9 als Beispiel für eine Kabelumhüllungsbefestigung zum Befestigen einer Kabelumhüllung des Kabels 17 angebracht.

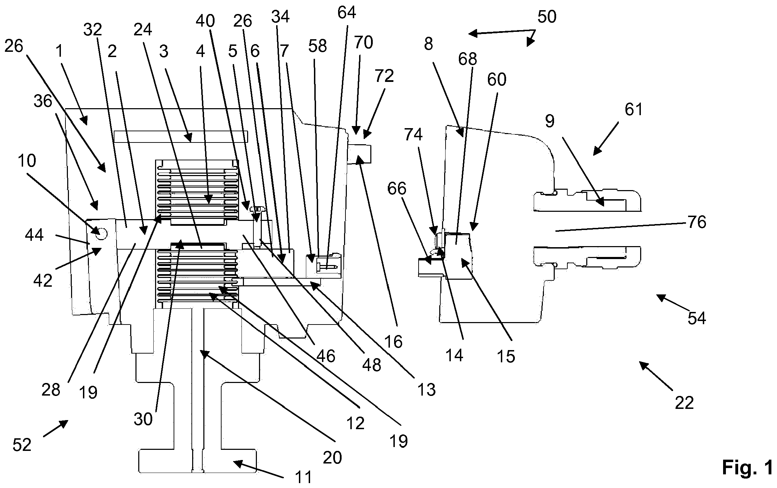

Wie in Figur 1 dargestellt, kann der Kabelanschlussgehäuseteil 54 von dem eigentlichen Dichtewächtergehäuse 1 entfernt werden, so dass auch bei bereits montiertem Dichtewächtergehäuse 1 ein bequemes Anschließen des Kabels 17 und der Litzen 18 an den Kabelklemmen 15 und der Kabelverschraubung 9 erfolgen kann. Die Kabel von Dichtewächtern sind oft sehr dick und unhandlich gestaltet, so dass dies eine erheblich Arbeitserleichterung bei der Montage darstellt.

Anschließend kann der Kabelanschlussgehäuseteil - hier gebildet durch das Stecker-Gehäuse 8 - mit dem angeschlossenen Kabel 17 zu dem Dichtewächtergehäuse 1 geführt werden und dort mittels des Gewindedoms 16 verschraubt werden. Hierzu kann bei einer nicht näher dargestellten Ausgestaltung eine lose in dem Stecker-Gehäuse 8 angeordnete Kabelklemme 15 mit angeklemmten Litzen 18 in den Leiterplattensteckverbinder 7 eingesteckt werden und eventuell verrastet werden, wobei dann erst anschließend eine Montage und Befestigung des Stecker-Gehäuses 8 erfolgt. Bei der dargestellten Ausgestaltung ist die Kabelklemme 15 mittels der Steckerverbindungsbefestigung 74 bereits passend an dem Stecker-Gehäuse 8 befestigt, so dass die Steckverbindung 62 gleichzeitig mit dem Anbringen und Befestigung des Stecker-Gehäuses 8 an dem Dichtewächtergehäuse 1 hergestellt wird.

### Bezugszeichenliste:

- 1: Dichtewächtergehäuse
- 2: Schalthebel
- 3: Anzeige
- 4: Referenzkammer (Referenzgasvolumen)
- 5: Einstellschraube (Stössel)
- 6: Mikroschalter
- 7: Leiterplattensteckverbinder
- 8: Stecker-Gehäuse
- 9: Kabelverschraubung
- 10: Schalthebelgelenk
- 11: Druckanschluss
- 12: Balg Schaltanlagegas
- 13: Leiterplatte
- 14: Befestigungsschraube Kabelklemme
- 15: Kabelklemme
- 16: Gewindedom für Befestigung Stecker-Gehäuse
- 17: Kabel
- 18: Litzen
- 19: Metallbalg
- 20: Schaltanlagegas
- 21: Kammer (in Verbindung mit dem Messvolumen)
- 22: Dichtewächter
- 24: Membran
- 26: Membranbewegungserfassungseinrichtung
- 28: Getriebeelement
- 30: Hebelgetriebe
- 32: einarmiger Hebel
- 34: Schalteinrichtung
- 36: erstes Ende
- 40: zweites Ende
- 42: Lagerung
- 44: Flansch
- 46: Querbalken
- 48: Öffnung
- 50: Gesamtgehäuse
- 52: Messbereichsgehäuseteil
- 54: Kabelanschlussgehäuseteil
- 56: Messmechanik
- 58: erstes Steckverbindungselement
- 60: zweites Steckverbindungselement
- 61: Kabelanschlussbereich
- 62: Steckverbindung
- 64: Stift
- 66: Buchse
- 68: Kabelklemmaufnahme
- 70: Schraubverbindung Gehäuseteile
- 72: Positionierhilfe
- 74: Steckerverbindungsbefestigung
- 76: Durchgangsöffnung für Litzen

## Patentansprüche

1. Dichtewächter (22) mit einem Gesamtgehäuse (50), das in einen Messbereichsgehäuseteil (52) und in einen Kabelanschlussgehäuseteil (54) aufgeteilt istwobei das Kabelanschlussgehäuseteil (54) an dem Messbereichsgehäuseteil (54) lösbar befestigt ist, wobei der Messbereichsgehäuseteil (52) eine Messmechanik (56) mit einer Erfassungseinrichtung (26) zum Umwandeln einer mit der Gasdichte sich ändernden Größe in ein elektrisches Signal enthält,
**dadurch gekennzeichnet,**
**dass** der Messbereichsgehäuseteil (52) ein erstes Verbindungselement (58) einer Kontaktverbindung (62) enthält und wobei der Kabelanschlussgehäuseteil (54) einen Kabelanschlussbereich (61) und ein zweites Verbindungselement (60) der Kontaktverbindung (62) aufweist, wobei das Kabelanschlussgehäuseteil (54) eine Durchgangsöffnung (76) zum Durchführen von Litzen (18) eines Anschlusskabels (17) aufweist und wobei die Durchgangsöffnung (76) mit einer Kabelumhüllungsbefestigung zum Befestigen einer Kabelumhüllung versehen ist.

2. Dichtewächter (22) nach Anspruch 1,
**dadurch gekennzeichnet,**
**dass** die Kontaktverbindung eine Steckverbindung (62) ist, wobei die Verbindungselemente Steckverbindungselemente sind, wobei das eine (58) der Steckverbindungselemente (58, 60) mehrere Stifte (64) und das andere (60) der Steckverbindungselemente (58, 60) mehrere Buchsen (66) zur kontaktierenden Aufnahme der Stifte (64) aufweist.

3. Dichtewächter (22) nach Anspruch 2,
**dadurch gekennzeichnet,**
**dass** das zweite Steckverbindungselement (60) mehrere Kabelklemmaufnahmen (68) zum klemmenden Anschließen von Litzen (18) des Anschlusskabels (17) aufweist, die über die Stifte (64) und Buchsen (66) mit unterschiedlichen Ausgängen der Erfassungseinrichtung (26) in Kontakt bringbar sind.

4. Dichtewächter (22) nach einem der voranstehenden Ansprüche,
**dadurch gekennzeichnet,**
**dass** die Kabelumhüllungsbefestigung als Kabelverschraubung (9) zum Befestigen der Kabelumhüllung ausgebildet ist.

5. Dichtewächter (22) nach einem der voranstehenden Ansprüche, **dadurch gekennzeichnet,**
**dass** das Kabelanschlussgehäuseteil (54) eine Kontaktverbindungsbefestigung (74) zum Befestigen des zweiten Verbindungselements (60) aufweist.

6. Dichtewächter nach Anspruch 5,
**dadurch gekennzeichnet,**
**dass** die Kontaktverbindungsbefestigung (74) mit wenigstens einer Befestigungsschraube (14) versehen ist.

7. Dichtewächter (22) nach einem der voranstehenden Ansprüche,
**dadurch gekennzeichnet,**
**dass** das zweite Verbindungselement (60) an dem Kabelanschlussgehäuseteil (54) Befestigungsklemmen zum Anklemmen von Litzen (18) eines Anschlusskabels (17) und einen Steckverbindungsbereich zur Steckverbindung mit dem korrespondierenden ersten Steckverbindungselement (58) an dem Messbereichsgehäuseteil (52) aufweist.

8. Dichtewächter (22) nach einem der voranstehenden Ansprüche,
**dadurch gekennzeichnet,**
**dass** das Messbereichsgehäuseteil (52) eine Leiterplatte (13) mit Bauelementen zur Erzeugung, Verarbeitung und/oder Weiterleitung von bei der Erfassung der Dichte erzeugten elektrischen Signalen und einen Leiterplattensteckverbinder (7) zur Steckverbindung mit dem korrespondierenden zweiten Steckverbindungselement (60) an dem Kabelanschlussgehäuseteil (54) enthält.

9. Dichtewächter nach Anspruch 8,
**dadurch gekennzeichnet,**
**dass** das Messbereichsgehäuseteil (52) eine Anzeige (3) enthält.

10. Dichtewächter (22) nach einem der voranstehenden Ansprüche,
**dadurch gekennzeichnet,**
**dass** der Dichtewächter (22) zur Überwachung einer Gasdichte in einem Messvolumen mit einer Membran (24) ausgerüstet ist, die mit dem Messvolumen derart in Verbindung steht, dass sie sich bei Änderung einer Gasdichte in dem Messvolumen bewegt, und einer mit der Membran (24) verbundenen Membranbewegungserfassungseinrichtung (26) zum Umwandeln einer Membranbewegung in ein elektrisches Signal, wobei das elektrische Signal über die Kontaktverbindung (62) von dem Messbereichsgehäuseteil (52) zu dem Kabelanschlussgehäuseteil (54) und dort zu einem Kabel (17) überführbar ist.

11. Montageverfahren zum Montieren eines Dichtewächters (22) nach einem der voranstehenden Ansprüche, mit den Schritten:
• Anschließen eines Messbereichsgehäuseteils (52), das mit einer Messmechanik (56) und einer Erfassungseinrichtung (26) zur Umwandeln einer mit der zu überwachende Gasdichte korrelierenden Messgröße in ein elektrisches Signal und einem mit der Erfassungseinrichtung (26) elektrisch verbundenen ersten elektrischen Verbindungselement (58) zum Herstellen einer elektrischen Verbindung (62) versehen ist, an ein zu überwachendes Messvolumen, wobei der Messbereichsgehäuseteil (52) von einem Kabelanschlussgehäuseteil (54) getrennt ist und ohne das Kabelanschlussgehäuseteil (54) montiert wird,
• Anschließen eines Kabels (17) an das von dem Messbereichsgehäuseteil (52) getrennte Kabelanschlussgehäuseteil (54) und Verbinden von Litzen (18) des Kabels (17) mit Kontaktanschlüssen (66) eines an dem Kabelanschlussgehäuseteil (54) vorgesehenen zweiten Verbindungselement (60) zum Herstellen der elektrischen Verbindung (62),
• Positionieren und Befestigen des an das Kabel (17) angeschlossenen Kabelanschlussgehäuseteils (54) an das an das Messvolumen angeschlossene Messbereichsgehäuseteil (52) unter Verbindung des ersten Verbindungselements (58) mit dem zweiten Verbindungselement (60), um so die elektrische Verbindung (62) durch die Montage der Gehäuseteile (52, 54) aneinander herzustellen.

## Claims

1. Density monitor (22), having a general housing (50) that is divided into a measurement area housing part (52) and a cable connection housing part (54), wherein the cable connection housing part (54) is detachably fastened to the measurement area housing part (54), wherein the measurement area housing part (52) contains a mechanical measuring device (56) having a detection device (26) for the conversion of a parameter that changes with the gas density to an electrical signal, **characterized in that**
the measurement area housing part (52) contains a first connecting element (58) of a contact connection (62), wherein the cable connection housing part (54) includes a cable connection region (61) and a second connecting element (60) of the contact connection (62), wherein the cable connection housing part (54) includes a through hole (76) for the passage of strands (18) of a connecting cable (17), and wherein the through hole (76) is provided with a cable sheath fixing device for fixing a cable sheath.

2. Density monitor (22) according to claim 1,
**characterized in that**
the contact connection is a plug connection (62), wherein the connecting elements are plug connection elements, wherein the one (58) of the plug connection elements (58, 60) comprises several pins (64) and the other one (60) of the plug connection elements (58, 60) comprises several sockets (66) for receiving the pins (64) in a contacting manner.

3. Density monitor (22) according to claim 2,
**characterized in that**
the second plug connection element (60) comprises several cable clamping seats (68) for the clamping connection of strands (18) of the connecting cable (17) that can be contacted with different outputs of the detection device (26) via the pins (64) and the sockets (66).

4. Density monitor (22) according to one of the preceding claims,
**characterized in that**
the cable sheath fixing device is configured as a threaded cable connection (9) for fixing the cable sheath.

5. Density monitor (22) according to one of the preceding claims,
**characterized in that**
the cable connection housing part (54) includes a contact connection fixing device (74) for fixing the second connecting element (60).

6. Density monitor according to claim 5,
**characterized in that**
the contact connection fixing device (74) is provided with at least one fixing screw (14).

7. Density monitor (22) according to one of the preceding claims,
**characterized in that**
the second connecting element (60) comprises on the cable connection housing part (54) fixing clamps for the clamp fixing of strands (18) of a connecting cable (17), and a plug connection region for the plug connection with the corresponding first plug connecting element (58) on the measurement area housing part (52).

8. Density monitor (22) according to one of the preceding claims,
**characterized in that**
the measurement area housing part (52) includes a printed circuit board (13) with components for generating, processing and/or conveying electrical signals generated during the density detection, and a printed circuit board plug connector (7) for the plug connection with the corresponding second plug connecting element (60) on the cable connection housing part (54).

9. Density monitor according to claim 8,
**characterized in that**
the measurement area housing part (52) includes a display (3).

10. Density monitor (22) according to one of the preceding claims,
**characterized in that**
the density monitor (22) for monitoring a gas density in a measuring volume is equipped with a membrane (24) that communicates with the measuring volume in such a manner that it moves within the measuring volume upon a change of the gas density, and with a membrane movement detection device (26) connected to the membrane (24) and for the conversion of a membrane movement to an electrical signal, wherein the electrical signal can be transmitted from the measurement area housing part (52) to the cable connection housing part (54) and there to a cable (17), via the contact connection (62).

11. Assembly method for the assembly of a density monitor (22) according to one of the preceding claims, the method comprising the steps of:
• connecting to a measurement volume to be monitored, a measurement area housing part (52) that is provided with a mechanical measuring device (56) and a detection device (26) for the conversion of a measured variable correlated with the gas density to be monitored to an electrical signal, and with a first electrical connecting element (58) electrically connected with the detection device (26) for establishing an electrical connection (62), wherein the measurement area housing part (52) is separate from a cable connection housing part (54) and is mounted without the cable connection housing part (54),
• connecting a cable (17) to the cable connection housing part (54) that is separate from the measurement area housing part (52), and connecting strands (18) of the cable (17) with contact terminals (66) of a second connecting element (60) provided on the cable connection housing part (54), for establishing an electrical connection (62),
• positioning and fixing the cable connection housing part (54) connected to the cable (17) at and to the measurement area housing part (52) connected to the measurement volume, by connecting the first connecting element (58) to the second connecting element (60) to establish the electrical connection (62) by mounting the housing parts (52, 54) to one another.

## Revendications

1. Dispositif de surveillance de densité (22), comprenant un boîtier général (50) qui est divisé en une partie de boîtier de zone de mesure (52) et une partie de boîtier de connexion de cable (54), dans lequel la partie de boîtier de connexion de cable (54) est fixée de manière détachable sur la partie de boîtier de zone de mesure (54), dans lequel la partie de boîtier de zone de mesure (52) comporte un dispositif mécanique de mesure (56) avec un dispositif de détection (26) pour convertir une grandeur qui change avec la densité de gaz en un signal électrique,
**caractérisé en ce que**
la partie de boîtier de zone de mesure (52) comporte un premier élément de connexion (58) d'une connexion par contact (62), et dans lequel la partie de boîtier de connexion de câble (54) comporte une zone de connexion de câble (61) et un deuxième élément de connexion (60) de la connexion par contact (62), la partie de boîtier de connexion de câble (54) présentant une ouverture de passage (76) pour faire passer des torons (18) d'un câble de connexion (17), et l'ouverture de passage (76) étant munie d'un dispositif de fixation d'un tube de câble, pour fixer un tube de câble.

2. Dispositif de surveillance de densité (22) selon la revendication 1,
**caractérisé en ce que**
la connexion par contact est une connexion à fiche (62), dans laquelle les éléments de connexion sont des éléments de connexion à fiche, l'un (58) des éléments de connexion à fiche (58, 60) comprenant plusieurs broches (64) et l'autre (60) des éléments de connexion à fiche (58, 60) comprenant plusieurs douilles (66) pour le logement des fiches (64) de manière contactante.

3. Dispositif de surveillance de densité (22) selon la revendication 2,
**caractérisé en ce que**
le deuxième élément de connexion à fiche (60) comporte plusieurs logements de serrage de câble (68) pour le raccordement de torons (18) du câble de connexion (17), torons qui peuvent être mises en contact avec des sorties différentes du dispositif de détection (26) par les broches (64) et les douilles (66).

4. Dispositif de surveillance de densité (22) selon l'une des revendications précédentes,
**caractérisé en ce que**
le dispositif de fixation de tube de câble est réalisé sous forme de passe-cable à vis (9) pour fixer le tube de câble.

5. Dispositif de surveillance de densité (22) selon l'une des revendications précédentes,
**caractérisé en ce que**
la partie de boîtier de connexion de câble (54) comporte une fixation de connexion de contact (74) pour fixer le deuxième élément de connexion (60).

6. Dispositif de surveillance de densité selon la revendication 5,
**caractérisé en ce que**
la fixation de connexion de contact (74) est muni d'au moins un vis de fixation (14).

7. Dispositif de surveillance de densité (22) selon l'une des revendications précédentes,
**caractérisé en ce que**
le deuxième élément de connexion (60) comporte, sur la partie de boîtier de connexion de câble (54), des bornes de fixation par serrage pour fixer par serrage des torons (18) d'un câble de connexion (17), et une zone de connexion à fiche pour la connexion à fiche avec le premier élément de connexion à fiche (58) correspondant sur la partie de boîtier de zone de mesure (52).

8. Dispositif de surveillance de densité (22) selon l'une des revendications précédentes,
**caractérisé en ce que**
la partie de boîtier de zone de mesure (52) comporte une carte de circuit imprimé (13) avec des composants pour générer, traiter et/ou transférer des signaux électriques générés lors de la détection de la densité, et un connecteur à fiche de la carte de circuit imprimé (7) pour la connexion à fiche avec le deuxième élément de connexion à fiche (60) correspondant sur la partie de boîtier de connexion de câble (54).

9. Dispositif de surveillance de densité selon la revendication 8, **caractérisé en ce que** la partie de boîtier de zone de mesure (52) comporte un indicateur (3).

10. Dispositif de surveillance de densité (22) selon l'une des revendications précédentes, **caractérisé en ce que**
le dispositif de surveillance de densité (22) pour surveiller une densité de gaz dans un volume de mesure est muni d'une membrane (24) en communication avec le volume de mesure de telle manière qu'elle se déplace lors d'un changement d'une densité de gaz dans le volume de mesure, et d'un dispositif de détection de déplacement de membrane (26) connecté à la membrane (24) et pour convertir un déplacement de membrane en un signal électrique, le signal électrique pouvant être transmis, via la connexion par contact (62), de la partie de boîtier de zone de mesure (52) vers la partie de boîtier de connexion de câble (54) et là vers un câble (17).

11. Procédé de montage pour monter un dispositif de surveillance de densité (22) selon l'une des revendications précédentes, le procédé comprenant les étapes:
• connecter à un volume de mesure à surveiller, une partie de boîtier de zone de mesure (52) munie d'un dispositif mécanique de mesure (56) et d'un dispositif de détection (26) pour convertir une grandeur mesurée étant en corrélation avec la densité de gaz à surveiller en un signal électrique, et munie d'un premier élément de connexion électrique (58) connecté de manière électrique avec le dispositif de détection (26) pour établir une connexion électrique (62), la partie de boîtier de zone de mesure (52) étant séparée d'une partie de boîtier de connexion de câble (54) et étant montée sans la partie de boîtier de connexion de câble,
• connecter un câble (17) à la partie de boîtier de connexion de câble (54) séparée de la partie de boîtier de zone de mesure (52) et connecter des torons (18) du câble (17) avec des bornes de contact (66) d'un deuxième élément de connexion (60) prévu sur la partie de boîtier de connexion de câble (54), pour établir une connexion électrique (62),
• positionner et fixer la partie de boîtier de connexion de câble (54) connectée au câble (17) sur la partie de boîtier de zone de mesure (52) connectée au volume de mesure en connectant le premier élément de connexion (58) avec le deuxième élément de connexion (60) pour ainsi établir la connexion électrique (62) par le montage des parties de boîtier (52, 54) l'une à l'autre.
